# EUROPEAN PATENT SPECIFICATION

(11) **EP 1 989 571 B1**
(45) Date of publication and mention of the grant of the patent: **25.07.2012**
(21) Application number: 07705646.3
(22) Date of filing: 26.02.2007
(51) Int. Cl.: G01S 15/42, G01S 15/93

(54) **SYSTEM AND METHOD FOR ULTRASONIC DETECTION, PARTICULARLY FOR APPLICATIONS ON MOTOR VEHICLES OR THE LIKE**
SYSTEM UND VERFAHREN ZUR ULTRASCHALLERKENNUNG, INSBESONDERE FÜR ANWENDUNGEN IN KRAFTFAHRZEUGEN ODER ÄHNLICHEM
SYSTEME ET PROCEDE DE DETECTION ULTRASONIQUE, EN PARTICULIER POUR DES APPLICATIONS SUR VEHICULES A MOTEUR OU SIMILAIRES

(30) Priority: 27.02.2006 IT MO20060071
(43) Date of publication of application: 12.11.2008
(73) Proprietor: Meta System S.p.A., 42124 Reggio Emilia (IT)
(72) Inventor: PRATI, Stefano, I-42100 Reggio Emilia (IT)
(74) Representative: Brunacci, Marco
(86) International application number: PCT/IB2007/000443
(87) International publication number: WO 2007/096758

(56) References cited:
- FR-A- 2 817 973
- US-A- 4 305 296
- US-A- 5 797 847
- US-A1- 2005 225 439
- US-B1- 6 327 221
- WEBB P ET AL: "High Resolution Beam Forming For Ultrasonic Arrays" IEEE TRANSACTIONS ON ROBOTICS AND AUTOMATION, IEEE INC, NEW YORK, US, vol. 12, no. 1, February 1996 (1996-02), XP011053091 ISSN: 1042-296X

## Description

### Technical Field

This invention refers to a system and method for ultrasonic detection, particularly for applications on motor vehicles or the like, such as parking aid or anti-break-in applications.

### Background art

The use of obstacle detection systems on motor vehicles, capable of assisting in the performance of specific manoeuvres such as parking, and of particular use when there are objects outside the driver's range of vision such as, for example, poles of such height as to be hidden, during such manoeuvre, by the body of the motor vehicle itself.

Such known systems include, generally, a plurality of capsules positioned in relation to the motor vehicle's rear and/or front bumper bars and operatively connected to a control unit; each of the capsules is fitted with a respective ultrasonic transducer, piezoelectric or of another type, capable of converting an electrical signal, made up of a sequence of pulses and coming from the control unit, into a corresponding ultrasonic signal.

The sound signals thus transmitted define a determined emitted beam, and the presence of possible obstacles hit by such a beam generates reflected echo signals, subsequently received by the same ultrasonic transducers (piezoelectric or of another type) or by other adjacent transducers.

The echo signals thus received, and ranging within a predetermined time window, are generally compared with one or more threshold signals correlated to predefined allowed distances between the vehicle and the obstacle; subsequent to the comparison with the threshold signals the capsule sends a signal to the control unit, which processes it and sends a sound or visual warning, which is progressive and perceptible to the driver and capable of indicating the effective distance between the vehicle and the obstacle.

Anti-theft systems capable of detecting intrusions inside the compartment of motor vehicles or the like are also known, which commonly comprise a plurality of capsules equipped with ultrasonic transducers (or other) distributed inside the vehicle compartment and capable of monitoring a given signalling volume in case of the introduction of undesired objects and/or the intrusion of persons.

These known systems are not however free from drawbacks, among which is the fact that, during installation, the orientation of the capsules is often problematic due to the constraints of special motor vehicle shapes such as, for example, rounded bumper bars, the particular form and positioning of upholstery parts and accessories inside the vehicle compartment or, again, the presence of protruding structural elements such as a rear towing hook.

Such constraints, indeed, complicate the determination of the most suitable orientation of the capsules, capable of transmitting and receiving signals so as to guarantee a proper coverage of the areas to be monitored, also considering the need to reduce the visual impact of the capsules on the motor vehicle's general aesthetics.

The need to carry out possible subsequent modifications to the motor vehicle, furthermore, requires further changes to the system, which are anything other than negligible in complexity and capable to define new orientations of the capsules and different system setups.

The document FR 2 817 973 A discloses a method for the detection of the distance and the angular position of objects by means of a network of ultrasound sensors.

However, also this know method does not allow to facilitate the positioning of the capsules and to minimize, at the same time, the aesthetic impact of the capsules on the motor vehicle.

### Purpose of the Invention

The primary aim of this invention is to eliminate the drawbacks of the known technique complained of above, by devising a system and method for ultrasonic detection, particularly for applications on motor vehicles or the like, which allows for accurate detection, facilitating the positioning of the capsules and minimising, at the same time, the aesthetic impact of the capsules on the motor vehicle or the like.

Within the sphere of this technical aim, a further purpose of the invention is to facilitate the system setting up operations, also following possible subsequent structural modifications to the motor vehicle or the like.

Another purpose of this invention is to cater for the above aims with a simple structure, of relatively practical implementation, safe to use and with effective operation, as well as having a relatively low cost.

This aim and these purposes are all achieved by means of the system and method defined in the appended claims.

### Brief Description of the Drawings

Further characteristics and advantages of this invention will appear even more evident from the detailed description of a preferred, but not exclusive, form of embodiment of a system and method for obstacle detection, particularly for applications on motor vehicles or the like, illustrated indicatively by way of non limiting example, in the attached drawings wherein:
figure 1 is a diagram of the system according to the invention;
figures 2 and 3 are front views that schematically illustrate two different forms of embodiment of a capsule of the system according to the invention;
figure 4 is a plan view that schematically illustrates possible orientations of the transmission/reception lobe of a capsule of the system according to the invention.

### Forms of embodiment of the Invention

With particular reference to such figures, by reference number 1 has been globally designated a system for ultrasonic detection, particularly for applications on motor vehicles or the like, comprising a capsule S featuring at least two ultrasonic transducer elements T, of the piezoelectric type or of another type, and capable of the reception and transmission of respective ultrasonic signals and echo signals reflected by possible obstacles for the definition of a single operative lobe L.

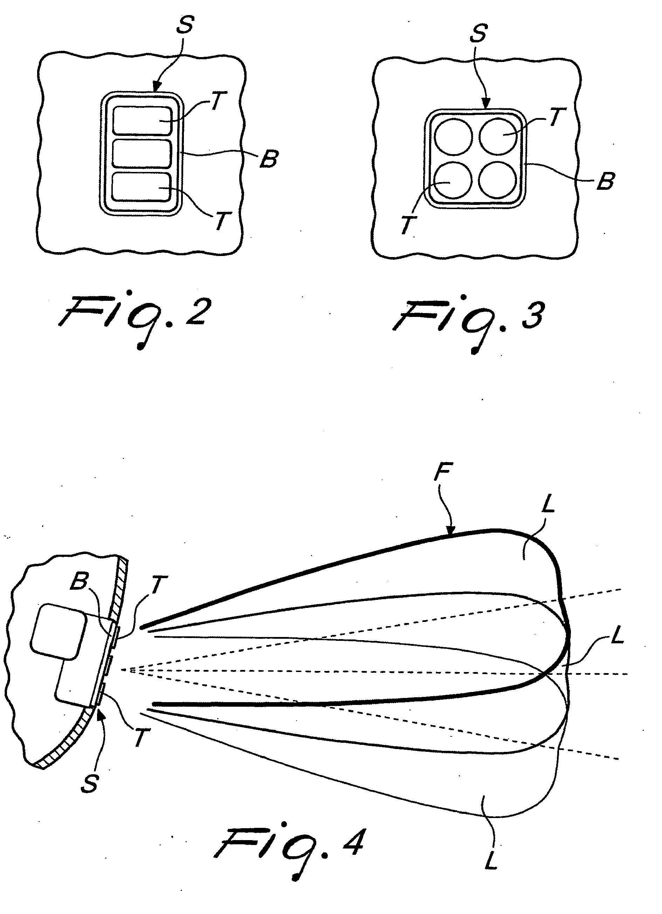

With particular reference to the forms of embodiment illustrated in figures 2 and 3, the capsule S can comprise three or four transducer elements T suitably arranged and supported by a base B for fastening to a motor vehicle or the like. Alternative structures of capsule S cannot however be ruled out comprising a plurality of transducer elements T in a different number and differently arranged in relation to each other.

The system 1 comprises, furthermore, independent piloting means 2 for each of the transducer elements T, which are suitable for regulating the phase and/or amplitude of the transmitted and received ultrasonic signals for varying the orientation and/or form of said operative lobe L.

In particular, figure 4 shows three possible orientations of the operative lobe L. For each of the capsules S, the piloting means 2 are operatively associated to a respective management and control unit 3 capable of carrying out a parametric evaluation of the received echo signals. The signals thus processed by each management and control unit 3 are sent to a central unit for the determination of the presence and/or position of the obstacle.

The piloting means 2 comprise a transmission set 4 suitable for processing a reference electrical signal 5 for the determination of input signals 6, respectively, to each of the transducer elements T; the input signals 6 are arranged in relation to each other in a predetermined time sequence and their amplitude is regulated for piloting the transducer elements T with the above mentioned time phase displacement.

In particular, the transmission set 4 comprises an oscillator device 7 capable of generating the reference electrical signal 5, of an electrical pulse type. Advantageously, the transmission set 4 comprises phase displacement and/or processing devices 8 of the reference electrical signal 5, operatively placed in between the oscillator device 7 and each of the transducer elements T, and capable of sending the input signals 6 to the transducer elements T with the introduction of respective and predefined time delays with respect to the reference electrical signal 5.

The phase displacement and/or processing devices 8, furthermore, are capable of regulating the amplitude of such input signals 6.

The piloting means 2 comprise a reception set 9 capable of processing output signals 10, respectively, from each of the transducer elements T, subsequent to the reception of echo signals, for the determination of a single regulated signal 11.

In particular, in a possible but not limiting form of embodiment, the reception set 9 comprises realignment and/or processing devices 12 of the phase of output signals 10 into respective realigned signals 13; the realignment and/or processing devices 12 are operatively associated, respectively, upstream of each of the transducer elements T and downstream of a summing device 14 of the realigned signals 13 for obtaining the regulated electrical signal 11.

The transmission set 4 and the reception set 9 are operatively associated with the management and control unit 3.

In particular, the management and control unit 3 is operatively associated with the phase displacement and/or processing devices 8 and with the realignment and/or processing devices 12 for the definition of transmission and reception delays of each of the transducer elements T, with the oscillator device 7 for the definition of the reference electrical signal 5, and with the summing device 14 for the reception of the regulated electrical signal 11.

Different types of devices and/or connections cannot, however, be ruled out wherein, for example, the realigned signals 13 are sent in parallel to the management and control unit 3 and processed by it directly.

Usefully, each of the management and control units 3 comprises means of comparison between the regulated electrical signal 11 and one or more predetermined threshold values and is associated with a central unit connected to signalling means, of the sound or visual type, capable of indicating to the driver of a motor vehicle or the like the presence and/or relative position of the obstacle (for example indicating the obstacle distance by means of a progressive visual signal).

The detection method, particularly for applications on motor vehicles or the like of the parking aid or anti-break-in systems type, comprises a transmission stage of ultrasonic signals and a reception stage of echo signals reflected by an obstacle for the definition of a single operative lobe L, and a parametric evaluation stage of such received echo signals for the determination of the presence and/or relative position of the obstacle with respect to the motor vehicle.

The transmission and reception phases are activated by means of the transducer elements T of the capsule S.

Advantageously, the method comprises a regulation stage of the phase and/or amplitude of the ultrasonic signals transmitted by each of the transducer elements T, for the orientation and/or focalisation of the operative lobe L. It is to be noted that the physical principle used to direct and focus the lobe L is that of effects superimposition on the waves transmission/reception (for example mechanical) simultaneously emitted/received by each of the transducer elements T of a capsule S.

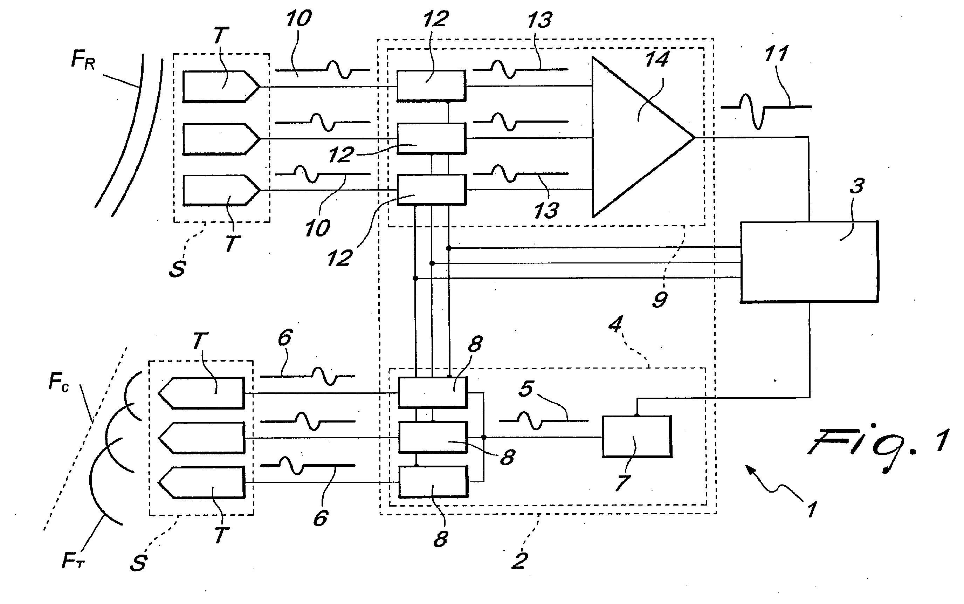

As schematically illustrated in figure 1, each transducer element T emits a respective wave front in FT transmission, which all together define a common directable FC wave front. The same transducer elements T then detect a reception FR wave front, resulting from the reflection by one or more obstacles. Alternatively to the reception and transmission on the same capsule S, with the aim of extending or improving the detection of obstacles, several capsules S can receive the signals transmitted by a single capsule S, thus making for a triangulation.

In particular, the regulation stage comprises the processing in transmission of a reference electrical signal 5 for the determination of input signals 6 to the transducer elements T, arranged in a predefined time sequence to obtain the above mentioned time phase displacement and having a predefined amplitude. Usefully, the processing stage in transmission comprises the generation, through the oscillator device 7, of such reference electrical signal 5 and the subsequent phase displacement of the reference electrical signal itself, by means of the phase displacement and/or processing devices 8, capable of introducing a predefined time delay for at least one of the input signals 6.

The regulation stage comprises, furthermore, the processing in reception of output signals 10 from the transducer elements T, subsequent to the reception of echo signals reflected from one or more obstacles, for the definition of a single regulated electrical signal 11.

In particular, the processing stage in reception comprises the realignment of the phase of output signals 10, by means of the realigning and/or processing devices 12, suitable for obtaining respective realigned signals 13 summed up together, through the summing device 14, for obtaining the regulated electrical signal 11. In a particular but not restrictive way, the subsequent parametric evaluation stage can comprise the comparison by means of the management and control unit 3 between the regulated electrical signal 11 thus obtained and one or more threshold values (predetermined or dynamic) and the subsequent signalling to the driver of the motor vehicle or the like (of the sound or visual type) of the presence and/or relative position of the obstacle.

It cannot however be ruled out different and more complex phases of parametric evaluation and analysis of the regulated electrical signal 11 or, in general, of the received echo signals.

In particular, the flexibility of the capsules S in varying the orientation of the respective operative lobes L can allow the control unit, besides detecting possible obstacles, also to measure through the capsules S the parking area available to the motor vehicle during its approach, before the manoeuvre, to inform the driver and the other possible control units on board capable of receiving such information of the feasibility or not of the manoeuvre.

It has in practice been seen how the described invention achieves the intended purposes, and in particular the fact is underlined that the presence of several transducer elements by a single capsule, simultaneously piloted with distinct phase delays, allows the direction of the operative lobe, thus guaranteeing an accurate detection of the presence and/or position of obstacles and limiting, at the same time, the aesthetic impact of the capsule after its installation on motor vehicles or similar.

The invention allows, indeed, upon the installation on a motor vehicle or the like, for the adaptation of the capsule to the profile of the bumper bar, or of particular structural elements inside the compartment; the subsequent system set-up then allows to direct and/or focus suitably the beam emitted for a correct detection.

Moreover, it has to be noted that the system set-up is as a result notably simplified : the invention indeed allows for the use of a single model of capsule for different gradients of use (for example, for installation of bumper bars of different sizes, belonging to different motor vehicle models).

A further advantage of the invention consists in the possibility of adapting to whether the motor vehicle is stationary or moving, through the dynamic orientation of the emitted beam.

The presence of a plurality of transducer elements for each capsule, properly arranged in relation to each other, together with the possibility of vertical and horizontal scans, allows, furthermore, for a more accurate analysis of the reflected echo signals, distinguishing with greater precision, for example, the obstacles near the road from vertical obstacles, or allowing for the measurement and analysis of the area available for the parking manoeuvre.

In practice, the materials used, as well as contingent shapes and dimensions may be any according to requirements without because of this moving outside the protection scope of the following claims.

## Claims

1. System (1) for ultrasonic detection, particularly for applications on motor vehicles or the like, comprising at least one capsule (S) associable to a motor vehicle which is equipped with at least two transducer elements (T) suitable for the transmission, with the same frequency, of respective ultrasonic signals and the reception of echo signals reflected by at least one obstacle for the definition of a single operative lobe (L), independent piloting means (2) of each of said transducer elements (T) suitable for the regulation of at least one between the phase and the amplitude of said transmitted ultrasonic signals and said received echo signals for varying the orientation and/or form of said operative lobe (L), wherein said piloting means (2) comprise at least one reception set (9) suitable for processing output signals (10), respectively, from said transducer elements (T), subsequent to said reception, for the determination of a single regulated electrical signal, and wherein said reception set (9) comprises realignment and/or processing devices (12) of the phase of said output signals (10) suitable for obtaining respective realigned signals (13), each of said realignment and/or processing devices (12) being operatively associated with at least one of said transducer elements (T), **characterized in that** said piloting means (2) comprise at least one transmission set (4) suitable for processing a reference electrical signal (5) for the determination of input signals (6) to said transducer elements (T), said input signals (6) being arranged in a predetermined time sequence and having a predetermined amplitude, wherein said transmission set (4) comprises at least one oscillator device (7) suitable for generating said reference electrical signal (5) and at least one phase displacement and/or processing device (8) of said reference electrical signal (5), operatively placed in between said oscillator device (7) and at least one among said transducer elements (T), and suitable for sending at least one of said input signals (6) with the introduction of a predefined time delay and a predefined amplitude variation, with respect to said reference electrical signal, and **in that** comprise a management and control unit (3) operatively associated with said phase displacement and/or processing devices (8) and with said realignment and/or processing devices (12) for the definition of transmission and reception, delays of each of the transducer element (T), in order to vary the orientation of the respective operative lobes (L) for detecting possible obstacle end/or measure the parking area available to the motor vehicle.

2. System (1) according to claim 1, **characterised in that** said reception set (9) comprises at least one summing device (14) of said realigned signals (13) for obtaining said regulated electrical signal.

3. System (1) according to one or more of the preceding claims, **characterised in that** said management and control unit (3) comprises means of comparison between said regulated electrical signal and at least one predetermined threshold value.

4. System (1) according to one or more of the preceding claims, **characterised in that** said management and control unit (3) is operatively associated with a central unit.

5. System (1) according to claim 4, **characterised in that** said central unit is operatively associated with means for signalling the presence of said obstacle and/or the relative position of said obstacle and/or parking area available.

6. System (1) according to claim 5, **characterised in that** said means for signalling are of the sound or visual type.

7. System (1) according to one or more of the preceding claims, **characterised in that** said capsule (S) comprises a base for fastening to a motor vehicle or the like and for supporting said transducer elements (T).

8. System (1) according to one or more of the preceding claims, **characterised in that** said capsule (S) comprises a plurality of said transducer elements (T).

9. System (1) according to one or more of the preceding claims, **characterised in that** said transducer elements (T) are of the ultrasonic capsules type, piezoelectric or the like.

10. Method for ultrasonic detection, particularly for applications on motor vehicles or the like, comprising a transmission stage, with the same frequency, of at least two ultrasonic signals and a reception stage of echo signals reflected by at least one obstacle for the definition of a single operative lobe (L), a regulation stage of at least one between the phase and amplitude of each of said transmitted ultrasonic signals and said received echo signals for varying the orientation and/or form of said operative lobe, and a parametric evaluation stage of said received echo signals for the determination of the presence and/or position of said obstacle, wherein said regulation stage comprises the realignment of the phase of output signals (10) from said transducer elements (T), subsequent to said reception, to obtain respective realigned signals (13), **characterised in that** said regulation stage comprises:
- the processing of a reference electrical signal (5) for the determination of input signals (6) to transducer elements (T) suitable for the transmission of said ultrasonic signals, said input signals (6) being arranged in a predetermined time sequence and having a predefined amplitude;
- the generation of said reference electrical signal (5);
- the phase displacement of at least one of said input signals (6) suitable for introducing a predefined time delay with respect to said reference electrical signal (5).

11. Method according to claim 10, **characterised in that** said regulation stage comprises the sum of said realigned signals (13) for obtaining said regulated electrical signal.

12. Method according to claim 10 or 11, **characterised in that** said parametric evaluation stage comprises the comparison between said regulated electrical signal and at least one predetermined threshold value.

13. Method according to one or more of the claims from 10 to 12 **characterised in that** it comprises a stage signalling the presence and/or relative position of said obstacle and/or parking area available.

## Patentansprüche

1. System (1) zur Ultraschallerkennung, insbesondere für Anwendungen in Kraftfahrzeugen oder Ähnlichem, mit mindestens einer mit einem Kraftfahrzeug verbindbaren Kapsel (S), die mit mindestens zwei Wandlerelementen (T), die für das Senden, mit derselben Frequenz, entsprechender Ultraschallsignale und den Empfang von durch mindestens ein Hindernis reflektierten Echosignalen zum Definieren einer einzelnen Funktionskeule (L) ausgestattet ist, einer unabhängigen Leiteinrichtung (2) jedes der Wandlerelemente (T), geeignet für die Regulierung mindestens der Phase oder der Amplitude der gesendeten Ultraschallsignale und der empfangenen Echosignale zum Ändern der Orientierung und/oder Form der Funktionskeule (L), wobei die Leiteinrichtung (2) mindestens einen Empfangssatz (9) aufweist, der für das Verarbeiten von Ausgangssignalen (10) eweils aus den Wandlerelementen (T) im Anschluss an den Empfang zum Bestimmen eines einzelnen geregelten, elektrischen Signals geeignet ist, und wobei der Empfangssatz (9) Neuabgleichs- und/oder Verarbeitungsvorrichtungen (12) für die Phase der Ausgangssignale (10), die für das Erhalten entsprechender, neu abgeglichener Signale (13) geeignet sind, aufweist, wobei jede der Neuabgleichs- und/oder Verarbeitungsvorrichtungen (12) mit mindestens einem der Wandlerelemente (T) funktional verbunden ist, **dadurch gekennzeichnet, dass** die Leiteinrichtung (2) mindestens einen Sendesatz (4), der für das Verarbeiten eines elektrischen Bezugssignals (5) zum Bestimmen von Eingangssignalen (6) zu den Wandlerelementen (T) geeignet ist, aufweist, wobei die Eingangssignale (6) in einer vorgegebenen zeitlichen Folge angeordnet sind und eine vorgegebene Amplitude besitzen, wobei der Sendesatz (4) mindestens eine Oszillatorvorrichtung (7), die geeignet ist, das elektrische Bezugssignal (5) zu erzeugen, und mindestens eine Phasenverschiebungs - und/oder Verarbeitungsvorrichtung (8) für das elektrische Bezugssignal (5) aufweist, die funktional zwischen der Oszillatorvorrichtung (7) und mindestens einem der Wandlerelemente (T) angeordnet ist und die geeignet ist, mindestens eines der Eingangssignale (6) mit der Einführung einer vorgegebenen zeitlichen Verzögerung und einer vorgegebenen Amplitudenänderung in Bezug auf das elektrische Bezugssignal zu senden, und dadurch, dass sie eine Management- und Steuerungseinheit (3) aufweist, die mit den Phasenverschiebungs- und/oder Verarbeitungsvorrichtungen (8) und mit den Neuabgleichs - und/oder Verarbeitungsvorrichtungen (12) zum Definieren von Sende- und Empfangsverzögerungen jedes der Wandlerelementen (T) funktional verbunden sind, um die Orientierung der entsprechenden Funktionskeulen (L) für das Erkennen eines möglichen Hindernisses zu ändern und/oder um den dem Kraftfahrzeug zur Verfügung stehenden Parkraum zu messen.

2. System (1) nach Anspruch 1, **dadurch gekennzeichnet, dass** der Empfangssatz (9) mindestens eine Summiervorrichtung (14) für die neu abgeglichenen Signale (13) zum Erhalten des geregelten elektrischen Signals aufweist.

3. System (1) nach einem oder mehr der vorangegangenen Ansprüche, **dadurch gekennzeichnet, dass** die Management - und Steuerungseinheit (3) Einrichtungen für den Vergleich zwischen dem geregelten elektrischen Signal und mindestens einem vorgegebenen Schwellenwert aufweist.

4. System (1) nach einem oder mehr der vorangegangenen Ansprüche, **dadurch gekennzeichnet, dass** die Management - und Steuerungseinheit (3) mit einer zentralen Einheit funktional verbunden ist.

5. System (1) nach Anspruch 4, **dadurch gekennzeichnet, dass** die zentrale Einheit mit Einrichtungen zur Signalisierung des Vorhandenseins des Hindernisses und/oder der relativen Position des Hindernisses und/oder des zur Verfügung stehenden Parkraums funktional verbunden ist.

6. System (1) nach Anspruch 5, **dadurch gekennzeichnet, dass** die Einrichtung zum Signalisieren von akustischer oder visueller Art ist.

7. System (1) nach einem oder mehr der vorangegangenen Ansprüche, **dadurch gekennzeichnet, dass** die Kapsel (S) einen Sockel zum Befestigen an einem Kraftfahrzeug oder Ähnlichem und zum Halten der Wandlerelemente (T) aufweist.

8. System (1) nach einem oder mehr der vorangegangenen Ansprüche, **dadurch gekennzeichnet, dass** die Kapsel (S) eine Vielzahl der Wandlerelementen (T) aufweist.

9. System (1) nach einem oder mehr der vorangegangenen Ansprüche, **dadurch gekennzeichnet, dass** die Wandlerelemente (T) von der Art einer Ultraschallkapsel, piezoelektrisch oder dergleichen ist.

10. Verfahren zur Ultraschallerkennung, insbesondere für Anwendungen in Kraftfahrzeugen oder Ähnlichem, mit einer Stufe zum Senden, mit derselben Frequenz, von mindestens zwei Ultraschallsignalen und einer Stufe zum Empfangen von durch mindestens ein Hindernis reflektierten Echosignalen zum Definieren einer einzelnen Funktionskeule (L), einer Regelungsstufe für mindestens die Phase oder die Amplitude jedes der gesendeten Ultraschallsignale und der empfangenen Echosignale, um die Orientierung und/oder Form der Funktionskeule zu ändern, und einer Stufe zur parametrischen Auswertung der empfangenen Echosignale zum Bestimmen des Vorhandenseins und/oder der Position des Hindernisses, wobei die Regelungsstufe den Neuabgleich der Phase der Ausgangssignale (10) aus den Wandlerelementen (T) im Anschluss an den Empfang aufweist, um entsprechende neu abgeglichene Signale (13) zu erhalten, **dadurch gekennzeichnet, dass** die Regelungsstufe aufweist:
das Verarbeiten eines elektrischen Bezugssignals (5) zum Bestimmen der Eingangssignale (6) zu für die Sendung der Ultraschallsignale geeigneten Wandlerelementen (T), wobei die Eingangssignale (6) in einer vorgegebenen zeitlichen Folge angeordnet sind und eine vorgegebene Amplitude besitzen;
das Erzeugen des elektrischen Bezugssignals (5);
die Phasenverschiebung mindestens eines der Eingangssignale (6), geeignet für die Einführung einer vorgegebenen zeitlichen Verzögerung in Bezug auf das elektrische Bezugssignal (5).

11. Verfahren nach Anspruch 10, **dadurch gekennzeichnet, dass** die Regelungsstufe die Summe der neu abgeglichenen Signale (13) zum Erhalten des geregelten elektrischen Signals aufweist.

12. Verfahren nach Anspruch 10 oder 11, **dadurch gekennzeichnet, dass** die Stufe der parametrischen Auswertung den Vergleich zwischen dem geregelten elektrischen Signal und mindestens einem vorgegebenen Schwellenwert aufweist.

13. Verfahren nach einem oder mehr der Ansprüche 10 bis 12, **dadurch gekennzeichnet, dass** es eine Stufe, die das Vorhandensein und/oder die relative Position des Hindernisses und/oder des zur Verfügung stehenden Parkraums signalisiert, aufweist.

## Revendications

1. Système (1) de détection par ultrasons, en particulier destiné à des applications sur des véhicules à moteur ou similaires, comprenant au moins une capsule (S) associable à un véhicule à moteur qui est équipée d'au moins deux éléments transducteurs (T) aptes à la transmission, avec la même fréquence, de signaux ultrasonores respectifs et à la réception de signaux d'écho réfléchis par au moins un obstacle pour la définition d'un lobe opérationnel unique (L), des moyens (2) de pilotage indépendants de chacun desdits éléments transducteurs (T), aptes au réglage d'au moins l'une d'entre la phase et l'amplitude desdits signaux ultrasonores émis et desdits signaux d'écho reçus pour modifier l'orientation et/ou la forme dudit lobe opérationnel (L), dans lequel lesdits moyens de pilotage (2) comprennent au moins un groupe de réception (9) apte à traiter les signaux de sortie (10), respectivement, desdits éléments transducteurs (T), consécutivement à ladite réception, pour la détermination d'un signal électrique régulé unique, et dans lequel ledit groupe de réception (9) comprend des dispositifs (12) de réalignement et/ou de traitement de la phase desdits signaux de sortie (10), aptes à l'obtention de signaux réalignés respectifs (13), chacun desdits dispositifs (12) de réalignement et/ou de traitement étant opérationnellement associé à au moins l'un desdits éléments transducteurs (T), ***caractérisé en ce que*** lesdits moyens de pilotage (2) comprennent au moins un groupe de transmission (4) apte à traiter un signal électrique de référence (5) pour la détermination de signaux d'entrée (6) pour lesdits éléments transducteurs (T), lesdits signaux d'entrée (6) étant ordonnés dans une séquence temporelle prédéterminée et ayant une amplitude prédéterminée, dans lequel ledit groupe de transmission (4) comprend au moins un dispositif oscillateur (7) apte à générer ledit signal électrique de référence (5), et au moins un dispositif (8) de déplacement de phase et/ou de traitement dudit signal électrique de référence (5), placé opérationnellement entre ledit dispositif oscillateur (7) et au moins l'un parmi lesdits éléments transducteurs (T), et apte à envoyer au moins l'un desdits signaux d'entrée (6) avec l'introduction d'un retard temporel prédéfini et d'une variation d'amplitude prédéfinie, par rapport audit signal électrique de référence, et ***en ce qu'**il* comprend une unité (3) de gestion et de commande associée opérationnellement auxdits dispositifs (8) de déplacement de phase et/ou de traitement et auxdits dispositifs (12) de réalignement et/ou de traitement pour la définition de délais de transmission et de réception de chacun des éléments transducteurs (T), de manière à modifier l'orientation des lobes opérationnels respectifs (L) pour détecter des obstacles éventuels et/ou mesurer la zone de stationnement disponible pour le véhicule à moteur.

2. Système (1) selon la revendication 1, ***caractérisé en ce que*** ledit groupe de réception (9) comprend au moins un dispositif de sommation (14) desdits signaux réalignés (13) pour obtenir ledit signal électrique régulé.

3. Système (1) selon l'une ou plusieurs des revendications précédentes, ***caractérisé en ce que*** ladite unité (3) de gestion et de commande comprend des moyens de comparaison entre ledit signal électrique régulé et au moins une valeur de seuil prédéterminée.

4. Système (1) selon l'une ou plusieurs des revendications précédentes, ***caractérisé en ce que*** ladite unité (3) de gestion et de commande est opérationnellement associée à une unité centrale.

5. Système (1) selon la revendication 4, ***caractérisé en ce que*** ladite unité centrale est opérationnellement associée à des moyens pour signaler la présence dudit obstacle et/ou la position relative dudit obstacle et/ou l'aire de stationnement disponible.

6. Système (1) selon la revendication 5, ***caractérisé en ce que*** lesdits moyens pour signaler sont du type sonore ou visuel.

7. Système (1) selon l'une ou plusieurs des revendications précédentes, ***caractérisé en ce que*** ladite capsule (S) comprend une base pour une fixation à un véhicule à moteur ou similaire et pour supporter lesdits éléments transducteurs (T).

8. Système (1) selon l'une ou plusieurs des revendications précédentes, ***caractérisé en ce que*** ladite capsule (S) comprend une pluralité desdits éléments transducteurs (T).

9. Système (1) selon l'une ou plusieurs des revendications précédentes, ***caractérisé en ce que*** lesdits éléments transducteurs (T) sont du type capsules à ultrasons, piézoélectriques ou similaires.

10. Procédé pour la détection par ultrasons, en particulier destiné à des applications sur des véhicules à moteur ou similaires, comprenant une étape de transmission, avec la même fréquence, d'au moins deux signaux ultrasonores, et une étape de réception de signaux d'écho réfléchis par au moins un obstacle pour la définition d'un lobe opérationnel unique (L), une étape de réglage d'au moins l'une d'entre la phase et l'amplitude de chacun desdits signaux ultrasonores émis et desdits signaux d'écho reçus pour modifier l'orientation et/ou la forme dudit lobe opérationnel, et une étape d'évaluation paramétrique desdits signaux d'écho reçus pour la détermination de la présence et/ou de la position dudit obstacle, dans lequel ladite étape de réglage comprend le réalignement de la phase de signaux de sortie (10) provenant desdits élément transducteurs (T), après ladite réception, pour obtenir des signaux réalignés respectifs (13), ***caractérisé en ce que*** ladite étape de réglage comprend :
- le traitement d'un signal électrique de référence (5) pour la détermination de signaux d'entrée (6) pour lesdits éléments transducteurs (T) aptes à la transmission desdits signaux ultrasonores, lesdits signaux d'entrée (6) étant ordonnés dans une séquence temporelle prédéterminée et ayant une amplitude prédéfinie ;
- la génération dudit signal électrique de référence (5) ;
- le déplacement de phase d'au moins l'un desdits signaux d'entrée (6) apte à l'introduction d'un retard temporel prédéfini par rapport audit signal de référence électrique (5).

11. Procédé selon la revendication 10, ***caractérisé en ce que*** ladite étape de réglage comprend la somme desdits signaux réalignés (13) pour obtenir ledit signal électrique régulé.

12. Procédé selon la revendication 10 ou 11, ***caractérisé en ce que*** ladite étape d'évaluation paramétrique comprend la comparaison entre ledit signal électrique régulé et au moins une valeur de seuil prédéterminée.

13. Procédé selon l'une ou plusieurs des revendications 10 à 12, ***caractérisé en ce qu'**il* comprend une étape signalant la présence et/ou la position relative dudit obstacle et/ou de la zone de stationnement disponible.
